# EUROPÄISCHE PATENTANMELDUNG

(11) **EP 1 798 533 A1**
(43) Veröffentlichungstag der Anmeldung: **20.06.2007**
(21) Anmeldenummer: 05027688.0
(22) Anmeldetag: 16.12.2005
(51) Int. Cl.: G01F 15/00, G01F 15/18, G01N 1/10

(54) **Vorrichtung und Verfahren zum Ein- und/oder Ausführen einer Messvorrichtung in ein strömendes bzw. aus einem strömenden Medium**

(71) Anmelder: SIEMENS AKTIENGESELLSCHAFT, 80333 München (DE)
(72) Erfinder: Karl, Robert, 55127 Mainz (DE)

(57) **Zusammenfassung**

Die Erfindung betrifft eine Vorrichtung (2) zum Ein- und/oder Ausführen einer Messvorrichtung (M) in ein strömendes bzw. aus einem strömenden Medium, umfassend mindestens eine Flanschverbindung (20a) zum Anschließen an einen Stutzen (18) mindestens einer durchströmbaren Einrichtung (1) und eine als Schleusenarmatur ausgebildete Doppelabsperrung (6), wobei die Messvorrichtung (M) direkt mittig in die durchströmbare Einrichtung (1) einführbar ist und von dort eine Messprobe entnehmbar ist.

## Beschreibung

Die Erfindung bezieht sich auf eine Vorrichtung und ein Verfahren zum Ein- und/oder Ausführen einer Messvorrichtung in ein strömendes bzw. aus einem strömenden Medium. Des Weiteren betrifft die Erfindung die Verwendung einer derartigen Vorrichtung zum Ein- und/oder Ausführen einer Messvorrichtung in ein strömendes bzw. aus einem strömenden Medium in einer Vorrichtung zum Reinigen von Komponenten einer Kraftwerksanlage.

Derartige Vorrichtungen zum Ein- und/oder Ausführen einer Messvorrichtung in ein strömendes bzw. aus einem strömenden Medium sind beispielsweise aus der Kraftwerkstechnik bekannt. Üblicherweise werden dort in einer seitlich oder schräg von einer betrieblichen Leitung abgezweigten Leitung Proben eines strömenden Mediums entnommen. Dabei wird die Probe für verschiedene Messzwecke, z. B. zur Bestimmung der Reinheit des Mediums oder zur Bestimmung anderer Eigenschaften des Mediums, verwendet.

Für den Betrieb der Kraftwerksanlage sind beispielsweise an die Reinheit des strömenden Mediums, z. B. Dampfes, hohe Anforderungen gestellt. Insbesondere gilt es zu vermeiden, dass im Dampf partikelförmige Feststoffe mitgeführt werden. Solche Festkörperpartikel können zur Beschädigung von Einrichtungen oder Anlagenteilen, wie z. B. der Turbine, führen. Die Beschädigungen fallen dabei insbesondere an der Beschaufelung der Turbine an.

Eine in der Abzweigleitung entnommene Messprobe hat dabei den Nachteil, dass die in der Hauptströmung der Einrichtung mitströmenden Festkörperpartikel in der abgezweigten Teilströmung der Abzweigleitung zur Entnahme einer Messprobe nicht enthalten sind. Zudem ist die Teilströmung nicht repräsentativ hinsichtlich einer Messung von anderen Eigenschaften des Mediums der Hauptströmung, der Temperatur oder der chemischen/physikalischen Eigenschaften, aber insbesondere bei Beimischung von Fremdpartikeln, die sich nicht einfach separieren bzw. abscheiden lassen und nicht repräsentativ bei einer Probeentnahme sind.

Der Erfindung liegt daher die Aufgabe zugrunde, eine gegenüber dem Stand der Technik verbesserte Vorrichtung und ein verbessertes Verfahren zum Ein- und/oder Ausführen einer Messvorrichtung in ein strömendes bzw. aus einem strömenden Medium anzugeben.

Die erstgenannte Aufgabe wird erfindungsgemäß gelöst durch den Gegenstand des Anspruchs 1. Hinsichtlich des Verfahrens wird die Aufgabe gelöst durch die Merkmale des Anspruchs 12.

Vorteilhafte Weiterbildungen der Erfindung sind Gegenstand der Unteransprüche.

Die Erfindung geht dabei von der Überlegung aus, dass die Eigenschaften eines strömenden Mediums anhand einer Messprobe möglichst genau und sicher gemessen werden sollten. Dazu ist erfindungsgemäß eine Vorrichtung zum Ein- und/oder Ausführen einer Messvorrichtung in ein strömendes bzw. aus einem strömenden Medium (auch kurz "Entnahmevorrichtung" genannt) vorgesehen, die mindestens eine Flanschverbindung zum Anschließen an einen Stutzen mindestens einer durchströmbaren Einrichtung und eine als Schleusenarmatur ausgebildete Doppelabsperrung umfasst, wobei die Messvorrichtung direkt mittig in die durchströmbare Einrichtung einführbar ist und dort eine Messprobe entnehmbar ist.

Die Vorteile der Erfindung liegen insbesondere darin, dass durch die Entnahme einer Messprobe direkt aus der Strömungsmitte der durchströmbaren Einrichtung eine die Eigenschaften des Mediums möglichst genaue und repräsentative Probe entnommen wird. Insbesondere ist gegenüber einer aus einer Abzweigleitung und somit einer Teilströmung entnommenen Probe mittels der aus der Hauptströmung mittig entnommenen Probe eine Analyse des Mediums auf Inhaltsstoffe, insbesondere auf Fremdpartikel möglich, welche in der abgezweigten Teilströmung nicht enthalten sind. Zudem sind die Strömungsverhältnisse und die daraus resultierenden Eigenschaften des Mediums, wie z. B. Temperatur oder chemische/physikalische Eigenschaften, in der Hauptströmung durch Einführen der Messvorrichtung in den Hauptstrom sicher und genau messbar. Auch kann bei einer der Hauptströmung mittig entnommenen Messprobe ein größeres Messvolumen vermessen werden.

Durch die Flanschverbindung zum Anschließen an einen Stutzen einer durchströmbaren Einrichtung, z. B. einer betrieblichen Dampfleitung einer Kraftwerksanlage, und die als Schleusenarmatur ausgebildete Doppelabsperrung ist die Entnahmevorrichtung besonders druck- und temperaturfest ausgelegt. Die Doppelabsperrung ermöglicht mittels zweier Absperrarmaturen eine Trennung zwischen der Hauptströmung, z. B. einen Dampfraum einer Dampfleitung, und dem Schleusenraum und dient der sicheren Absperrung nach dem Schleusvorgang und der Druckentlastung. Zur Druckentlastung weist die Doppelabsperrung zwischen den beiden Absperrarmaturen zweckmäßigerweise ein als Entlastungsventil ausgebildetes Absperrventil auf. Die Druckentlastung zwischen den zwei Absperrarmaturen der Doppelabsperrung kann gleichzeitig als Leckagekontrolle der Erstabsperrung der beiden Absperrarmaturen dienen. Bei Bedarf kann zusätzlich an die Doppelabsperrung ein Kühlelement angeschlossen werden.

Die Flanschverbindung ist beispielsweise als eine standardmäßige 3"-Flanschverbindung (= 3-Zoll-Flanschverbindung) ausgeführt. Eine derartige Dimensionierung dient der sicheren Aufnahme eines unteren Lagers im Stutzen für eine Messvorrichtung, die in die durchströmte Einrichtung zur Vermessung oder Entnahme einer Messprobe des strömenden Mediums einführbar ist.
In einer bevorzugten Ausführungsform ist die Doppelabsperrung eingangs- und/oder ausgangsseitig mit mindestens einem Dichtelement versehen.

Die Flanschverbindung unterhalb der Schleuse umfasst vorzugsweise im Bereich des Stutzens zur durchströmten Einrichtung ein Auflager. Das Auflager dient der Aufnahme der Messvorrichtung, die an einem Aufnehmer befestigt ist. Hierdurch ist die Einschleusung der Messvorrichtung in die durchströmte Einrichtung und somit in eine vibrierende Strömung unproblematisch und muss nicht zeitlich begrenzt werden. Vorzugsweise ist das Auflager als eine Hülse mit einem umlaufenden Rand oder einem Konus ausgebildet. Dabei weist das Auflager zumindest teilweise einen Innenabsatz. Der Innenabsatz kann beispielsweise mit einem nicht zu steilen und nicht zu flachen Winkel angephast sein. Hierdurch wirkt der Innenabsatz wie ein Konus und dient der einfachen Fixierung des Aufnehmers. Der Aufnehmer, der korrespondierend zum Fasenwinkel des Innenabsatzes im Bereich der Befestigung ebenfalls angefast ausgebildet ist, wird hierdurch besonders sicher in der Vorrichtung gelagert.

Um ein Hineinfallen von losen Teilen, z. B. Befestigungsschrauben, in die durchströmte Einrichtung zu vermeiden, ist die Befestigung der Messvorrichtung im eingeschleusten Zustand gekapselt ausgeführt. Darüber hinaus kann mittels der Befestigung die Einfahrtiefe der Messvorrichtung in die durchströmte Einrichtung eingestellt werden. Zum Ein- und Ausführen der Messvorrichtung in die durchströmte Einrichtung ist ein mechanischer Antrieb, insbesondere eine Gewindespindel mit Mutter, vorgesehen. Die Gewindespindel ist maschinell über einen Motor oder manuell über ein Handrad betätigbar. Zur Dehnungskompensation und Temperaturkompensation ist eine elastische Tellerfeder vorgesehen, die unterhalb des Handrades angeordnet ist. Das Spindelende führt als Drehspindel aus dem Gehäuse, wo der Antrieb befestigt ist. Sowohl die Anordnung der Spindelmutter als auch deren Kompensationsausführung gegen Dehnungen und Verschiebungen verhindern die übliche Schwergängigkeit durch hohe Temperaturen.

Beim Ein- und Ausführen und somit beim Wechsel der Messvorrichtung wird das oberhalb der Doppelabsperrung oder Schleusenarmatur befindliche Gehäuse vor dem Öffnen zur Entnahme der Messprobe gezielt druckentlastet. Das Öffnen des Gehäuses geschieht anschließend über eine im Bereich oberhalb der Doppelabsperrung vorgesehene weitere Flanschverbindung. Die Flanschverbindung ist mit einer Dichtung, die ein leichtes Öffnen und Schließen zulässt, versehen. Unterhalb der Flanschverbindung als auch im oberen Gehäuseteil ist ein weiteres Entlastungsventil zur Druckentlastung des Gehäuses vorgesehen. Darüber hinaus kann gezielt entlastet, gekühlt sowie die Dichtheit der Doppelabsperrung überwacht werden.

Für eine einfache Anordnung der Entnahmevorrichtung an der Dampfleitung ist eine Halterung vorgesehen, die insbesondere als eine Sattelhalterung ausgebildet ist und auf der Dampfleitung aufsitzt. Damit ist eine steife Verbindung zur beispielsweise rohrförmigen durchströmten Einrichtung hergestellt, so dass Relativbewegungen vermieden sind. Damit wird eine hinreichend sichere Befestigung auch für einen Dauereinsatz der Vorrichtung an der rohrförmigen Einrichtung ermöglicht.

Bei einem Einsatz der Entnahmevorrichtung in einer Kraftwerksanlage wird die Entnahmevorrichtung beispielsweise für einen unterbrechungsfreien Reinigungsprozess an einer beispielsweise dampfführenden Einrichtung oder einem Anlagenteil der Kraftwerksanlage angeordnet, so dass der Einrichtung eine Messprobe direkt aus dem Dampfraum entnommen werden kann. Die Entnahme einer Messprobe kann an einer oder mehreren Stellen durchgeführt werden. Durch die Entnahme einer Messprobe während des Betriebs ist eine Reinigung der dampfführenden Einrichtungen oder Anlagenteile ohne Unterbrechung ermöglicht, wodurch die Reinigungszeiten erheblich reduziert werden. Während dieser Betriebsphasen erfolgt die Dampfführung immer im Bypass zur Turbine. Die Partikelfracht wird nach der Dampfentspannung und Dampfkondensation im Kondensat entfernt.

Die mit der Erfindung erzielten Vorteile bestehen insbesondere darin, dass durch eine besonders druck- und temperaturfeste Auslegung der Entnahmevorrichtung mittels einer Flanschverbindung und einer als Schleusenarmatur ausgebildeten Doppelabsperrung eine Entnahme einer Messprobe direkt mittig aus einer Strömung einer durchströmten Einrichtung ermöglicht ist. Aufwendige Abzweigleitungen sind hierdurch sicher vermieden. Zudem kann eine die Eigenschaften des strömenden Mediums weitgehend entsprechende Probe entnommen werden. Insbesondere können Eigenschaften, wie beispielsweise der Anteil an Festpartikeln in einer Strömung, Temperatur oder der chemischen/physikalischen Eigenschaften, besonders genau und sicher bestimmt werden.

Ein Ausführungsbeispiel der Erfindung wird anhand einer Zeichnung näher erläutert. Darin zeigen:
- FIG 1: eine detaillierte Darstellung einer an eine Einrichtung angeschlossenen Entnahmevorrichtung zur Entnahme einer Messprobe aus der durchströmten Einrichtung, und
- FIG 2 bis 8: in einer detaillierten Darstellung Komponenten der Entnahmevorrichtung gemäß FIG 1.

Gleiche Teile sind in allen Figuren mit denselben Bezugszeichen versehen.

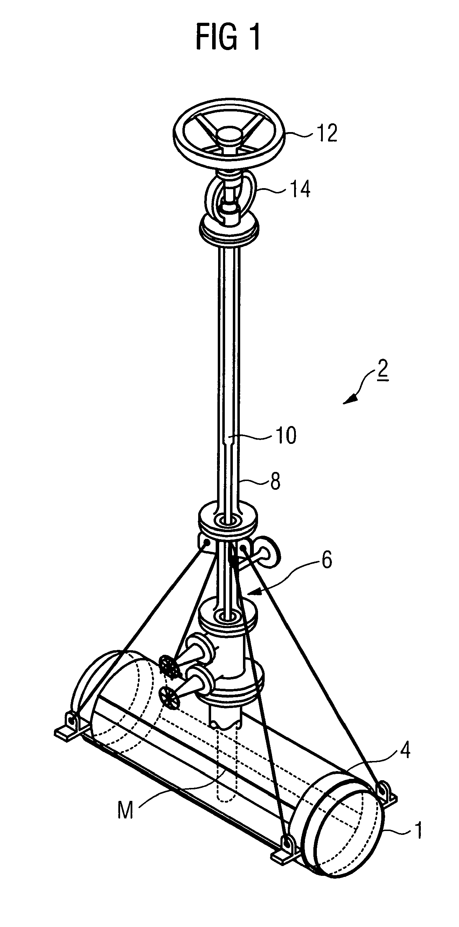

FIG 1 zeigt eine Vorrichtung 2 zum Ein- und/oder Ausführen einer Messvorrichtung M in ein strömendes bzw. aus einem strömenden Medium(im weiteren kurz Entnahmevorrichtung 2 genannt) einer durchströmten Einrichtung 1 (im Weiteren kurz Leitung 1 genannt).

Über eine als Sattelhalterung ausgeführte Halterung 4 ist die Entnahmevorrichtung 2 starr an der Leitung 1, beispielsweise einer rohrförmigen Dampfleitung befestigt, so dass Relativbewegungen vermieden sind.

Mittels der Entnahmevorrichtung 2 wird im Inneren der Leitung 1 im laufenden Betrieb als Messvorrichtung M beispielsweise ein so genannter Ausblasespiegel (auch "Prallplatte" genannt) eingeführt. Dabei handelt es sich um einen polierten Metallstreifen, z. B. einen Aluminium-, Kupfer- oder Stahlstreifen. Die Messvorrichtung M wird quer zur Strömungsrichtung in die Leitung 1 eingeführt. Der Reinheitsgrad des die Leitung 1 durchströmenden Mediums kann durch auf die Messvorrichtung M auftreffende Partikeleinschläge optisch beobachtet und beurteilt werden.

Die Entnahmevorrichtung 2 ist als eine Wechseleinrichtung ausgeführt, so dass die Messvorrichtung M gewechselt werden kann.

Um ein Auswechseln während des Betriebes, d.h. während die Leitung 1 von einem Medium durchströmt wird, zu ermöglichen, ist eine Doppelabsperrung 6 vorgesehen, die als eine Schleusenarmatur ausgebildet ist. Oberhalb der Doppelabsperrung 6 ist ein rohrförmiges Gehäuse 8 mit einer Gewindespindel 10 angeordnet. Die Gewindespindel 10 dient dem Ein- und Ausführen der Messvorrichtung M in die Leitung 1, beispielsweise in einen Dampfraum einer Dampfleitung. Das Ein- bzw. Ausführen kann manuell über ein oberhalb des Gehäuses 8 vorgesehenes Handrad 12 oder über einem nicht näher dargestellten motorisch betriebenen Antrieb erfolgen. Der Antrieb 14 ist mit einer Stopfbuchse und zentraler Tellerfederanpressung zur Temperaturkompensation ausgestattet. Über diese elastische Tellerfeder, die im Kraftweg angepresst ist, werden somit sämtliche Temperaturdehnungen kompensiert.

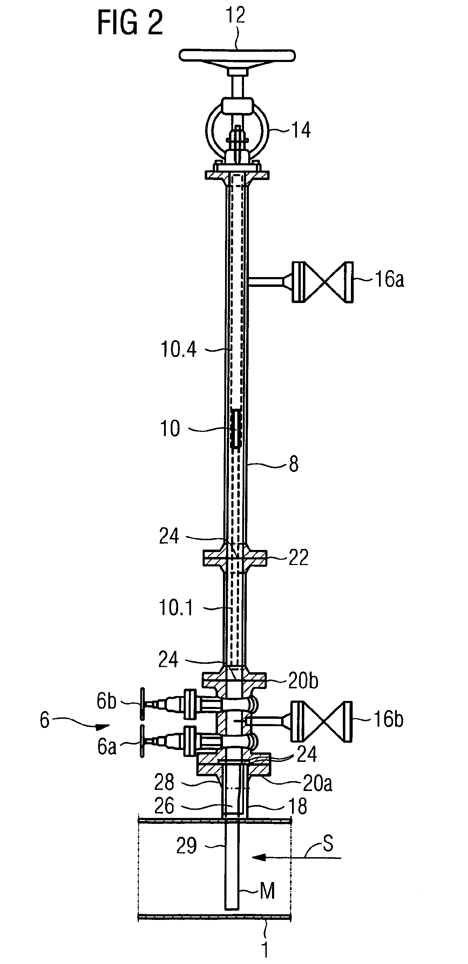

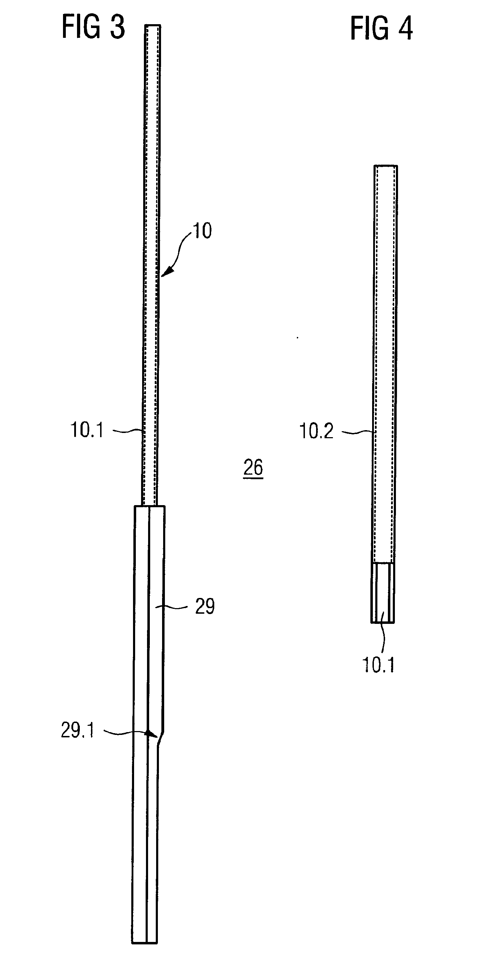

Das Gehäuse 8 kann gezielt druckentlastet werden. Hierzu umfasst die Entnahmevorrichtung 2 zwei Entlastungsventile 16a, 16b, z. B. Absperrventile, die in der FIG 2 näher dargestellt sind. FIG 3 zeigt die Entnahmevorrichtung 2 im Detail.

Eines der Absperrventile 16a ist oberhalb der Doppelabsperrung 6 am Gehäuse 8 zur Druckentlastung des Gehäuses 8 angeordnet. Das andere Absperrventil 16b ist zwischen den Absperrarmaturen 6a, 6b der Doppelabsperrung 6 zur Druckentlastung des Schleusenraums angeordnet. Hierzu ist die Doppelabsperrung 6 als eine Einheit oder als eine Blockarmatur aus zwei Absperrarmaturen 6a, 6b als Drehteller ausgeführt. Die mittels des betreffenden Entlastungsventils 16b bewirkte Druckentlastung zwischen den beiden Absperrarmaturen 6a, 6b dient gleichzeitig als Leckagekontrolle für die Erstabsperrung 6a.

Die Entnahmevorrichtung 2 ist an einen Stutzen 18 der Leitung 1 über eine Flanschverbindung 20a der Doppelabsperrung 6 angeschlossen. Am anderen Ende der Doppelabsperrung 6 ist eine weitere Flanschverbindung 20b zum Anschließen des Gehäuses 8 gegebenenfalls über einen Zwischenflansch 22 vorgesehen.

Eingangs- und ausgangsseitig der Doppelabsperrung 6 sind im Bereich der Flanschverbindungen 20a, 20b und gegebenenfalls im Bereich des Zwischenflansches 22 Dichtelemente 24 vorgesehen.

Die Flanschverbindung 20a am Stutzen 18 ist als eine 3"-Flanschverbindung ausgeführt. Mit dieser Dimensionierung wird eine Ausbildung eines unteren Lagers 26 im Stutzen 18 möglich. Das untere Lager 26 umfasst ein im Stutzen 18 zum Dampfraum eingebautes Auflager 28, das unterhalb der Schleusenarmatur 6 angeordnet ist. Das untere Lager 26 nimmt einen Aufnehmer 29 auf, an dem die Messvorrichtung M befestigt ist, die quer zur Strömungsrichtung S in die Leitung 1 einführbar ist.

FIG 3 zeigt im Detail die Gewindespindel 10, die aus einer Gewindestange 10.1 beispielsweise mit einem Trapezaußengewinde und dem Aufnehmer 29 zur Aufnahme der Messvorrichtung M gebildet ist. Der Aufnehmer 29 ist mit einem Innengewinde zum Führen der Gewindestange 10.1 versehen. Der Aufnehmer 29 weist einen nach innen angefasten Absatz 29.1 auf, wobei oberhalb des Absatzes 29.1 ein Raumbereich für eine Befestigung der Messvorrichtung M gebildet ist. Unterhalb des Absatzes 29.1 dient der Aufnehmer 29 zur Aufnahme der Messvorrichtung M. FIG 4 zeigt das obere Spindelgehäuse 10.2, das als Gewindebuchse mit einem Trapezinnengewinde zum Ein- und Ausführen der Gewindestange 10.1 vorgesehen ist.

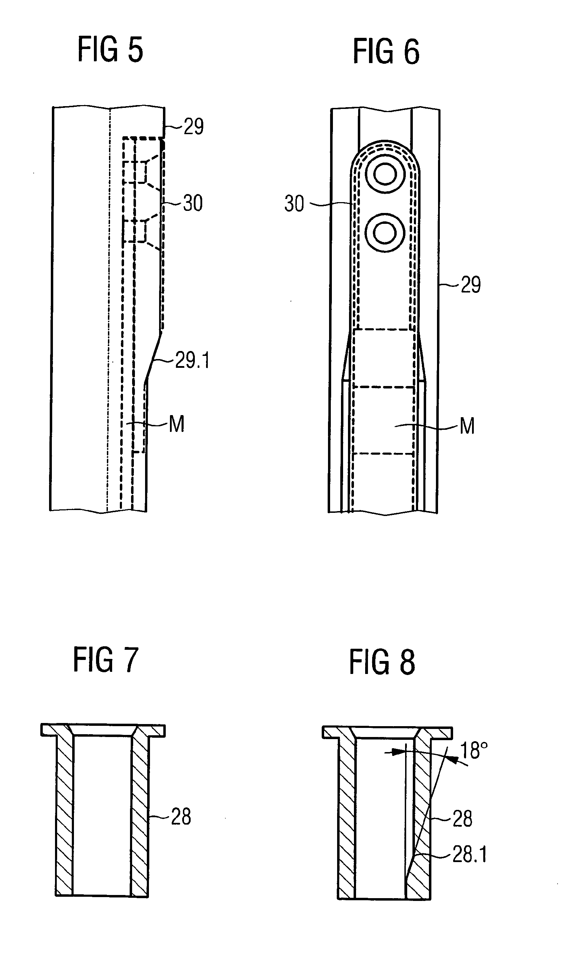

Die FIG 5 und 6 zeigen eine mögliche Ausführungsform für eine Befestigung 30 der Messvorrichtung M an dem Aufnehmer 29. Die Befestigung 30 ist als eine Doppelschraube mit einem angefasten Absatz ausgebildet, der korrespondierend zum Absatz 29.1 des unteren Aufnehmers 29 ausgebildet und von diesem aufgenommen wird, insbesondere auf diesem aufliegt. Hierdurch ist die Befestigung 30 der Messvorrichtung M im eingeschleusten Zustand gekapselt, so dass keine Befestigungsschrauben oder lose Teile in den Dampfraum hineinfallen können. Der Aufnehmer 29 ist als ein Vollkörper ausgebildet. Alternativ kann der Aufnehmer 29 als ein Hohlprofil ausgebildet sein, in welches die Gewindespindel 10 einführbar ist.

FIG 7 und 8 zeigen das Auflager 28 zur Aufnahme des Aufnehmers 29 im Detail. Zur Aufnahme, insbesondere zum Aufliegen der Befestigung 30 der Messvorrichtung M weist das Auflager 28 einen mit dem Absatz 29.1 des Aufnehmers 29 korrespondierenden Absatz 28.1, insbesondere einen angefasten Absatz mit einem entsprechenden Winkel von beispielsweise 18° auf. Das Auflager 28 ist als eine Hülse mit einem umlaufenden Rand R ausgebildet, der in der Flanschverbindung 20a gehalten ist.

Nachfolgend wird das Verfahren zum Auswechseln der Messvorrichtung M näher beschrieben.

Bei je nach Ausführungsform manuell oder motorisch angetriebener Gewindespindel 10 wird beispielsweise bei einem manuellen Antrieb das Handrad 12 bis zum Anschlag nach oben gedreht. Anschließend wird die untere Absperrarmatur 6a der Doppelabsperrung 6 geschlossen. Die Entlastungsventile 16a und 16b werden so lange geöffnet, bis kein Dampf mehr kommt. Zur zusätzlichen Sicherheit wird zusätzlich die obere Absperrarmatur 6b der Doppelabsperrung 6 geschlossen.

Nach Abkühlung wird die obere Schraubenreihe des Zwischenflansches 22 geöffnet und die Gewindespindel 10 mit dem Gehäuse 8 nach oben gezogen und zum Auswechseln der Messvorrichtung M entsprechend befestigt.

Das Handrad 12 wird nach unten gedreht, bis die Befestigung 30 der Messvorrichtung M sichtbar wird. Die Messvorrichtung M kann anschließend nach Lösen der Befestigung 30 ausgetauscht werden. Nach Anbringen einer neuen Messvorrichtung M wird das Handrad 12 nach oben gedreht. Die Gewindespindel 10 wird mit dem Gehäuse 8 wieder auf den Zwischenflansch 22 aufgesetzt, wobei eine genaue Position für einen guten Sitz des Dichtelements 24 von Bedeutung ist. Der Zwischenflansch 22 wird dann geschlossen. Auch die Entlastungsventile 16a, 16b werden geschlossen. Die Doppelabsperrung 6, d. h. beide Absperrarmaturen 6a, 6b, werden geöffnet und somit Druckausgleich hergestellt. Das Handrad 12 wird danach bis zum Anschlag nach unten gedreht, wodurch die Messvorrichtung M in die Leitung 1 geführt wird. Dabei wird das Handrad 12 mit Gefühl betätigt, d. h. so weit in den Konus gedreht, dass keine Vibration auftritt.

Die Entnahmevorrichtung 2 ist alternativ oder zusätzlich über das hier beschriebene Ausführungsbeispiel hinaus an eine beliebige von einem Medium durchströmbare Einrichtung anschließbar und zur Entnahme einer Messprobe aus dem strömenden Medium geeignet. Je nach Ausführung der durchströmbaren Einrichtung, insbesondere in Abhängigkeit von den Abmessungen und der Form der Einrichtung bzw. von den Eigenschaften des Strömungsmediums weist die Entnahmevorrichtung 2 eine entsprechend ausgebildete Halterung bzw. eine entsprechend ausgebildete Befestigung für die Messvorrichtung bzw. eine entsprechend ausgebildete Messvorrichtung auf. Beispielsweise kann anstelle der Befestigung an einer Dampfleitung einer Kraftwerksanlage die Entnahmevorrichtung 2 auch an eine Gasleitung oder eine Gasversorgungsleitung zur Entnahme einer Messprobe des Gases angeschlossen sein. Anstelle eines Prallspiegels zur Ermittlung des Reinheitsgrades des Strömungsmediums kann eine beliebig andere Messvorrichtung, z. B. ein Temperatursensor zur Bestimmung der chemischen/physikalischen Eigenschaften oder ein entsprechendes "Schöpfrohr" in das Strömungsmedium eingeführt werden.

Die Erfindung ist somit nicht auf die Ausführungsbeispiele beschränkt, sondern im Rahmen der Offenbarung vielfach variabel einsetzbar.

## Patentansprüche

1. Vorrichtung (2) zum Ein- und/oder Ausführen einer Messprobe in ein strömendes bzw. aus einem strömenden Medium, umfassend mindestens eine Flanschverbindung (20a) zum Anschließen an einen Stutzen (18) mindestens einer durchströmbaren Einrichtung (1) und eine als Schleusenarmatur ausgebildete Doppelabsperrung (6), wobei eine Messvorrichtung (M) direkt mittig in die durchströmbare Einrichtung (1) einführbar ist und dort eine Messprobe entnehmbar ist.

2. Vorrichtung nach Anspruch 1, wobei die Doppelabsperrung (6) eingangs- und/oder ausgangsseitig mit mindestens einem Dichtelement (24) versehen ist.

3. Vorrichtung nach Anspruch 1 oder 2, wobei die Doppelabsperrung (6) mit einem Absperrventil (16b) versehen ist.

4. Vorrichtung nach einem der Ansprüche 1 bis 3, wobei die Doppelabsperrung (6) ein Auflager (28) nahe der Hauptströmung umfasst.

5. Vorrichtung nach Anspruch 4, wobei das Auflager (28) als eine Hülse mit einem umlaufenden Rand ausgebildet ist.

6. Vorrichtung nach Anspruch 4 oder 5, wobei das Auflager (28) zumindest teilweise einen Innenabsatz (28.1) aufweist.

7. Vorrichtung nach einem der Ansprüche 4 bis 6, wobei das Auflager (28) zur Fixierung eines Aufnehmers (29), an welchem die in die durchströmbare Einrichtung (1) einführbare Messvorrichtung (M) befestigt ist, dient.

8. Vorrichtung nach Anspruch 7, wobei eine Befestigung (30) der Messvorrichtung (M) im eingeschleusten Zustand der Messvorrichtung (M) gekapselt ist.

9. Vorrichtung nach einem der Ansprüche 1 bis 8, wobei zum Ein- und Ausführen der Messvorrichtung (M) eine Gewindespindel (10) mit einem mechanischen Antrieb (14) vorgesehen ist.

10. Vorrichtung nach einem der Ansprüche 1 bis 9, mit einer Halterung (4) zur Befestigung an der durchströmbaren Einrichtung (1), wobei die Halterung (4) insbesondere als eine Sattelhalterung ausgebildet ist.

11. Verfahren zum Ein- und/oder Ausführen einer Messvorrichtung (M) in ein strömendes bzw. aus einem strömenden Medium, wobei ein Medium kontinuierlich durch eine durchströmte Einrichtung (1) geführt wird und eine Messprobe des Mediums direkt weitgehend aus der Strömungsmitte der durchströmten Einrichtung (1) entnommen wird.

12. Verfahren nach Anspruch 11, wobei als Medium Gas, Wasserdampf, Wasser oder ein anderes Medium bzw. Gemisch durch die Einrichtung (1) geführt wird.

13. Verfahren nach Anspruch 11 oder 12, wobei die Messprobe im Normalbetrieb der Einrichtung (1) entnommen wird.

14. Verwendung einer Vorrichtung (2) zum Ein- und/oder Ausführen einer Messvorrichtung (M) in ein strömendes bzw. aus einem strömenden Medium nach einem der Ansprüche 1 bis 10 in einer Vorrichtung zum Reinigen von Anlagenteilen (1) einer Kraftwerksanlage (1), wobei ein Medium kontinuierlich in einem geschlossenen Strömungskreis (K) durch ein oder mehrere zu reinigende Anlagenteile führbar ist und an mindestens einer betrieblichen Einrichtung (1) die Vorrichtung (2) zur Entnahme einer Messprobe aus dem Medium anschließbar ist.
